# EUROPÄISCHE PATENTANMELDUNG

(11) **EP 1 275 939 A2**
(43) Veröffentlichungstag der Anmeldung: **15.01.2003**
(21) Anmeldenummer: 02011856.8
(22) Anmeldetag: 28.05.2002
(51) Int. Cl.: G01D 5/16, G01B 7/30

(54) **Magnetoresistiver Winkelsensor**

(30) Priorität: 13.07.2001 DE 10133559
(71) Anmelder: SIEMENS AKTIENGESELLSCHAFT, 80333 München (DE)
(72) Erfinder: Jausel, Heiko, 67434 Neustadt and der Weinstrasse (DE); Porth, Wolfgang, 60388 Frankfurt (DE)

(57) **Zusammenfassung**

Ein magnetoresistiver Winkelsensor für den Einsatz in Bereichen mit Temperaturen über 160 °C hat einen ortsfesten Magnetfeldsensor (2, 3), der von einem dauermagnetischen Rotor (8) und einem mit diesem umlaufenden Schirmring (9) umgeben ist. Der Magnetfeldsensor (2, 3) ist zur Bestimmung der Winkellage dieses Rotors (8) ausgebildet. Der Rotor (8) bildet einen den Magnetfeldsensor (2, 3) umgebenden Ring aus einem Kunststoff mit darin eingebundenem Seltenerden-Magnetmaterial, bei dem es sich um eine Verbindung aus Neodym, Eisen und Bor handelt.

## Beschreibung

Die Erfindung betrifft einen magnetoresistiven Winkelsensor für den Einsatz in Bereichen mit Temperaturen über 160 °C, bei welchem ein ortsfester Magnetfeldsensor von einem dauermagnetischen Rotor und einem mit diesem umlaufenden Schirmring umgeben ist, wobei der Magnetfeldsensor zur Bestimmung der Winkellage dieses Rotors dient.

Winkelsensoren der vorstehenden Art werden beispielsweise in Kraftfahrzeugen zur Bestimmung der Drosselklappenstellung oder zur variablen Ventilsteuerung eines Verbrennungsmotors innerhalb des Verbrennungsmotors zur Überwachung der Nockenwellenstellung eingesetzt. Solche Winkelsensoren benötigen Magnete, die ein bezüglich der Feldrichtung homogenes und möglichst starkes magnetisches Feld erzeugen, welches relativ zu dem Magnetfeldsensor rotiert. Die relative Feldrichtungsänderung wird dann durch den Magnetfeldsensor detektiert.

Bei den derzeitigen Winkelsensoren der vorstehenden Art werden in einem Träger einzelne ring- oder quaderförmige Magnete aus Seltenerden-Magnetmaterial eingesetzt. Dabei führen Rundheits- und Lagetoleranzen zu Problemen. Da Seltenerden-Magnete sehr spröde sind, kommt es bei der Fertigung der Winkelsensoren oftmals sogar zu einem Brechen der Magnete, wodurch das gesamte Sensorsystem zu einem Ausschuss wird. Bei gesinterten Magneten macht sich für die Anwendung als Winkelsensor nachteilig bemerkbar, dass sie aufgrund ihres Fertigungsverfahrens bezüglich der Feldstärke und Feldrichtung inhomogen sind. Weiterhin sind gesinterte Magnete aus Seltenerden-Magnetmaterial NdFeB (Neodym, Eisen und Bor) sehr korrosionsanfällig, so dass für die Anwendung in Kraftfahrzeugen ein zusätzlicher Korrosionsschutz notwendig wird. Wenn der Winkelsensor bei Temperaturen über 160 °C arbeiten muss und Feldstärken von über 50 kA/m bei der erforderlichen kleinen Baugröße notwendig sind, musste man derzeit auf das teure Seltenerden-Magnetmaterial SmCo zurückgreifen.

Der Erfindung liegt das Problem zugrunde, einen Winkelsensor der eingangs genannten Art so zu gestalten, dass er Temperaturen über 160°C standzuhalten vermag, nur geringe Rundheitstoleranzen aufweist und ein sehr homogenes Feld erzeugt.

Dieses Problem wird erfindungsgemäß dadurch gelöst, dass der Rotor als Ring aus einem Kunststoff mit darin eingebundenem Seltenerden-Magnetmaterial ausgebildet ist.

Durch die Einbindung des Seltenerden-Magnetmaterials in das Material eines Ringes aus Kunststoff ergibt sich ein bezüglich der Stärke und Feldrichtungen sehr homogenes Magnetfeld. Zugleich stellt die Kunststoffeinbindung sicher, dass das Magnetmaterial vor Korrosion geschützt ist und verhindert Rundheit- und damit Unwuchtprobleme. Zugleich schützt der Kunststoff das Magnetmaterial vor Temperatureinwirkungen, so dass der Winkelsensor höheren Temperaturen ausgesetzt werden kann als ein Winkelsensor mit einzeln eingesetzten Magneten.

Besonders kostengünstig ist der magnetoresistiver Winkelsensor herstellbar, wenn gemäß einer Weiterbildung der Erfindung das Seltenerden-Magnetmaterial eine Verbindung aus Neodym, Eisen und Bor ist.

Da der Kunststoff ebenfalls relativ hohen Temperaturen widerstehen muss, ist es günstig, wenn der das Seltenerden-Magnetmaterial einbindende Kunststoff ein hochtemperaturfester Kunststoff ist. Hierfür eignet sich bei dem magnetoresistiven Winkelsensor für den Einsatz in Bereichen mit Temperaturen über 160 °C vorteilhaft - wie Versuche gezeigt haben - Polyphenylensulfid (PPS) oder ein flüssigkristallines Polymer (LCP, Liquid Crystal Polymer).

Besonders kostengünstig ist der magnetoresistiver Winkelsensor herstellbar, wenn der Rotor im Spritzgießverfahren unmittelbar innenseitig am Schirmring angespritzt ist. Die Praxis hat gezeigt, dass die Dicke des Schirmrings so gewählt werden kann, dass der Rotor innerhalb der Spritzgießform durch den Schirmring hindurch magnetisiert werden kann, so dass zuvor ein Handhaben eines starken Magneten entfällt.

Der Rotor ist besonders zuverlässig innerhalb des Schirmringes gehalten, wenn gemäß einer anderen Weiterbildung der Erfindung der Schirmring in seiner Innenmantelfläche Hinterspritzungen zur Erzeugung eines Formschlusses mit dem angespritzten Rotor aufweist.

Die Lagerung des Rotors mit dem Schirmring kann auf einfache Weise über einen Teilbereich des Rotors erfolgen, wenn an den Verbund aus Rotor und Schirmring an einer Seite ein Magnethalter angespritzt ist. Der Halter kann beispielsweise als Schaft ausgebildet sein.

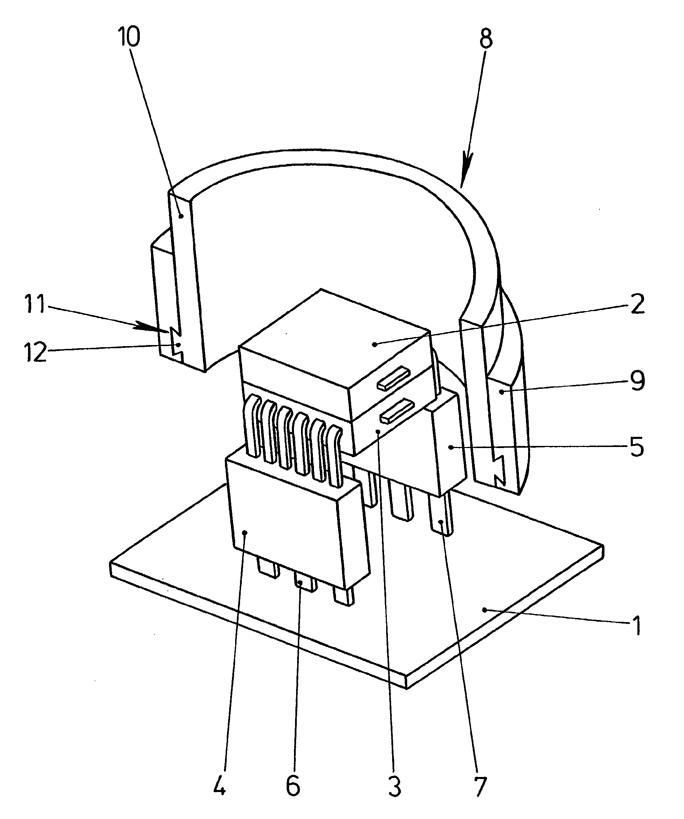

Zur weiteren Verdeutlichung der Erfindung ist in der Zeichnung ein erfindungsgemäßer magnetoresistiver Winkelsensor schematisch dargestellt und wird nachfolgend beschrieben.

Die Zeichnung zeigt perspektivisch eine ortsfest angeordnete Leiterplatte 1 (z. B. aus flexiblem Material oder Standard-Leiterplatten-Material oder ein Stanzgitter aufweisend), auf der zwei Magnetfeldsensoren 2, 3 und zwei Auswerteinheiten 4, 5 angeordnet sind. Die beiden Auswerteinheiten 4, 5 haben Ausgangsanschlüsse 6, 7, die elektrisch mit der Leiterplatte 1 verbunden sind.

Die Magnetfeldsensoren 2, 3 werden von einem Rotor 8 aus magnetischem Material umschlossen, auf dem außenseitig ein Schirmring 9 aus einem den Magnetfluss leitenden Material, insbesondere Weicheisen, angeordnet ist. Der Rotor 8 überragt den Schirmring 9 mit einem Magnethalter 10, der zur Lagerung der Einheit aus Rotor 8 und Schirmring 9 dient. Der Schirmring 9 weist an seiner Innenmantelfläche eine zurückspringende, hinterschnittene Ausnehmung 11 auf, die von einer Hinterspritzung 12 des Rotormaterials ausgefüllt ist.

Wichtig für die Erfindung ist, dass der Rotor 8 aus einem Kunststoff mit darin eingebundenem Seltenerden-Magnetmaterial ausgebildet ist. Bei dem Seltenerden-Magnetmaterial handelt es sich vorzugsweise um eine Verbindung aus Neodym, Eisen und Bor. Der dieses Material einbindende Kunststoff ist z. B. ein Polyphenylensulfid (PPS). Das kunststoffgebundene Seltenerden-Magnetmaterial wird direkt in den Schirmring 9 eingespritzt.

## Patentansprüche

1. Magnetoresistiver Winkelsensor für den Einsatz in Bereichen mit Temperaturen über 160 °C, bei welchem ein ortsfester Magnetfeldsensor von einem dauermagnetischen Rotor und einem mit diesem umlaufenden Schirmring umgeben ist, wobei der Magnetfeldsensor zur Bestimmung der Winkellage dieses Rotors dient, **dadurch gekennzeichnet, dass** der Rotor (8) als Ring aus einem Kunststoff mit darin eingebundenem Seltenerden-Magnetmaterial ausgebildet ist.

2. Magnetoresistiver Winkelsensor nach Anspruch 1, **dadurch gekennzeichnet, dass** das Seltenerden-Magnetmaterial eine Verbindung aus Neodym, Eisen und Bor ist.

3. Magnetoresistiver Winkelsensor nach den Ansprüchen 1 oder 2, **dadurch gekennzeichnet, dass** der das Seltenerden-Magnetmaterial einbindende Kunststoff Polyphenylensulfid (PPS) oder ein flüssigkristallines Polymer (LCP) ist.

4. Magnetoresistiver Winkelsensor nach zumindest einem der vorangehenden Ansprüche, **dadurch gekennzeichnet, dass** der Rotor (8) im Spritzgießverfahren unmittelbar innenseitig am Schirmring (9) angespritzt ist.

5. Magnetoresistiver Winkelsensor nach Anspruch 4, **dadurch gekennzeichnet, dass** der Schirmring (9) in seiner Innenmantelfläche Hinterspritzungen zur Erzeugung eines Formschlusses mit dem angespritzten Rotor (8) aufweist.

6. Magnetoresistiver Winkelsensor nach zumindest einem der vorangehenden Ansprüche, **dadurch gekennzeichnet, dass** an den Verbund aus Rotor (8) und Schirmring (9) an einer Seite ein Magnethalter (10) angespritzt ist.
